Europäisches Patentamt

European Patent Office

Office européen des brevets

(19)

(11) Numéro de publication : **0 329 515 B1**

(12) **FASCICULE DE BREVET EUROPEEN**

(45) Date de publication du fascicule du brevet :
**19.06.91 Bulletin 91/25**

(51) Int. Cl.⁵ : **B60S 1/40**

(21) Numéro de dépôt : **89400308.6**

(22) Date de dépôt : **03.02.89**

(54) **Connecteur pour solidariser un étrier de balai d'essuie-glace et un bras à extrémité recourbée en U.**

(30) Priorité : **09.02.88 FR 8801494**

(43) Date de publication de la demande :
**23.08.89 Bulletin 89/34**

(45) Mention de la délivrance du brevet :
**19.06.91 Bulletin 91/25**

(84) Etats contractants désignés :
**DE ES GB IT**

(56) Documents cités :
**DE-A- 2 829 437**
**DE-A- 3 618 288**
**FR-A- 2 414 426**
**FR-A- 2 439 693**
**GB-A- 2 034 175**

(73) Titulaire : **VALEO SYSTEMES D'ESSUYAGE**
**21-27 Boulevard Gambetta**
**F-92130 Issy-les-Moulineaux (FR)**

(72) Inventeur : **Maubray, Daniel**
**16, Boulevard Rodin**
**F-92130 Issy-les-Moulineaux (FR)**

(74) Mandataire : **Gamonal, Didier**
**Société VALEO Service Propriété Industrielle**
**30, rue Blanqui**
**F-93406 Saint Ouen (FR)**

EP 0 329 515 B1

## Description

La présente invention concerne un connecteur destiné à solidariser un étrier de balai d'essuie-glace et un bras à extrémité recourbée en U.

Comme cela est montré dans le document FR-A-2 414 426, un tel connecteur est utilisé pour solidariser un étrier de balai d'essuie-glace comportant un axe transversal et un bras à extrémité recourbée en U présentant une lumière sur une de ses branches pour l'accrochage de ce connecteur.

Le connecteur décrit dans le susmentionné document est du genre comprenant une pièce à profil longitudinal sensiblement en forme de U à deux branches propres à se loger dans la concavité de l'extrémité recourbée en U du bras et est muni d'un moyen d'accrochage propre à coopérer avec la lumière de ce bras.

Les bras de fabrication courante ne sont pas tous identiques.

Notamment et comme cela est décrit dans le document DE-A-28 29 437, il est prévu d'utiliser un connecteur comportant des moyens d'accrochage permettant de relier un étrier de balai d'essuie-glace avec un bras d'essuie-glace présentant soit une extrémité recourbée en U soit une extrémité rectiligne.

Cependant comme cela a déjà été mentionné, les bras et plus particulièrement leurs extrémités recourbées en U peuvent être différentes.

Selon les fabricants, non seulement, le rayon de courbure de l'extrémité change mais de plus, pour un même rayon de courbure, la distance à laquelle est située la lumière par rapport au fond du U est également variable. Cela nécessite, lorsque l'on veut proposer des balais d'essuie-glace à la rechange, la livraison d'autant de connecteurs que de types de bras existant.

La présente invention a pour objet un connecteur pouvant coopérer avec plusieurs types de bras à extrémité recourbée en U afin de limiter le nombre des pièces devant être livrées.

Elle a plus précisément pour objet un connecteur pour solidariser un étrier de balai d'essuie-glace et un bras à extrémité recourbée en U, ledit étrier comportant un axe transversal tandis que ledit bras présente une lumière sur une de ses branches pour l'accrochage dudit connecteur, ledit connecteur étant du genre comprenant une pièce à profil longitudinal sensiblement en forme de U à deux branches, propre à se loger dans la concavité de l'extrémité recourbée dudit bras, munie d'un moyen d'accrochage propre à coopérer avec la lumière dudit bras (connecteur connu, par exemple, de FR-A-2 414 426), caractérisé en ce que l'une des branches dudit connecteur comporte en plus dudit moyen d'accrochage, dit premier moyen d'accrochage, au moins un moyen d'accrochage supplémentaire, dit second moyen d'accrochage, situé sur la même face que celle où se trouve le premier moyen d'accrochage et à une distance du fond du U différente de celle à laquelle se trouve ledit premier moyen d'accrochage.

Un connecteur suivant l'invention peut alors s'adapter à au moins deux bras différents présentant le même rayon de courbure.

Avantageusement, pour son démontage, un seul moyen de déverrouillage a été prévu, qui fonctionne quel que soit le moyen d'accrochage mis en oeuvre.

Des caractéristiques relatives au mode de réalisation de l'invention sont indiquées dans les revendications dépendantes 2 à 10.

Les caractéristiques et avantages de l'invention ressortiront d'ailleurs de la description qui va suivre, à titre d'exemple, en référence aux dessins annexés sur lesquels :

– la figure 1 est une vue en coupe dans la zone centrale d'accrochage d'un ensemble étrier de balai-bras monté à l'aide d'un connecteur suivant l'invention, pour un premier type de bras ;

– la figure 2 est une vue de dessous du connecteur suivant l'invention ;

– la figure 3 est une vue en coupe longitudinale du connecteur suivant l'invention ;

– la figure 4 est une vue en coupe longitudinale du connecteur monté dans un second type de bras.

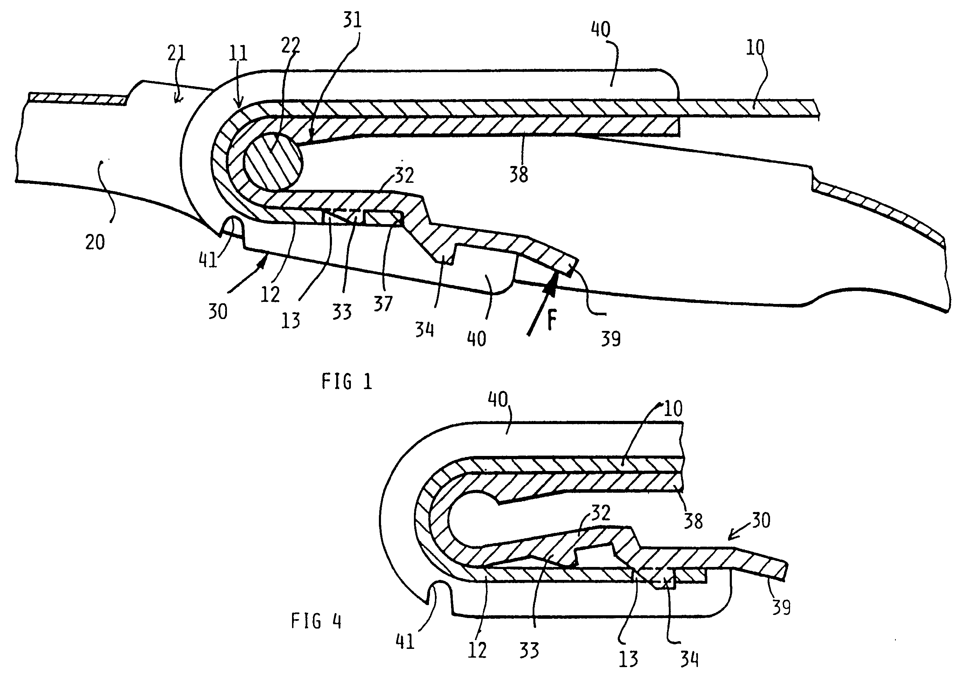

Comme visible à la figure 1, l'étrier 20 d'un balai d'essuie-glace doit être monté sur l'extrémité d'un bras 10 présentant une extrémité recourbée 11 en U.

Dans l'exemple représenté, ledit étrier 20 comporte une ouverture centrale 21 traversée par un axe transversal 22 sur lequel doit s'accrocher le bras 10. Cet axe pourrait, de façon connue en soi, n'être matérialisé que par ses deux extrémités formées par des crevés des flancs de l'étrier.

De manière également connue en soi, l'axe transversal 22 peut être extérieur à l'étrier 20 du balai d'essuie-glace comme dans le cas des balais déportés latéralement.

La solidarisation du bras 10 et de l'étrier 20 se fait, de manière connue en soi, avec l'interposition d'un connecteur 30 formé par une pièce moulée en matière plastique, à profil longitudinal sensiblement en forme de U dont les dimensions sont telles qu'elle se loge dans la concavité de l'extrémité recourbée 11 après une déformation élastique.

Le bras 10 présente, dans la branche 12, une lumière 13 globalement rectangulaire, située sensiblement au milieu de sa section, propre à coopérer avec un moyen d'accrochage dudit connecteur. Sur les figures 1 et 4, on a représenté des bras 10 dont l'extrémité présent le même rayon de courbure mais pour lesquels la distance séparant la lumière 13 du fond du U varie.

Le connecteur 30, objet de la présente invention, est tel qu'il peut s'adapter à ces deux types de bras ce qui permet de ne fabriquer qu'une pièce à la place des deux usuellement nécessaires.

Sur la face externe 50 de la branche 32 du connecteur 30 destinée à coopérer avec la branche 12, il est prévu deux ergots 33, 34 destinés à former un premier et un second moyen d'accrochage.

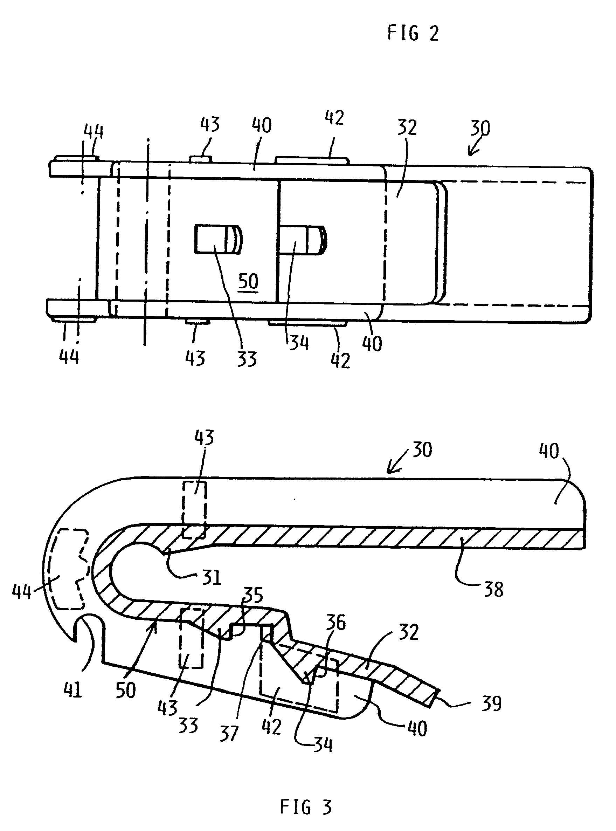

Ces ergots 33, 34, devant collaborer avec une lumière 13 d'un bras 10, sont situés transversalement, comme visible à la figure 2, au centre de la branche 32.

Les ergots 33, 34 formant les moyens d'accrochage du connecteur 30 sur le bras 10 présentent, à cet effet, une face 35, 36, opposée au fond du U, perpendiculairement à la branche 32 afin de collaborer avec une face de la lumière 13. Leur dimension perpendiculairement à la branche 32 est sensiblement égale à l'épaisseur du bras 10. Les faces 35, 36 se raccordent, par une face oblique se rapprochant du fond du U, à la partie courante de la branche 32. La base des ergots 33, 34 est de dimension telle qu'ils puissent entrer dans les lumières 13.

On voit sur la figure 1, que, lorsque la lumière 13 est proche du fond du U, c'est l'ergot 33 qui sert de moyen d'accrochage.

L'extrémité de la branche 12 est alors positionnée près d'un épaulement 37 de la branche 32.

Par contre, figure 4, c'est l'ergot 34 qui collabore avec la lumière 13. Le connecteur 30 est alors pincé, l'ergot 33 reposant contre la face interne de la branche 12.

Le profil de la branche 32 est tel que, quel que soit l'ergot utilisé pour l'accrochage, la portion de connecteur avoisinante est parfaitement appliquée contre la face interne du bras 10. A cet effet, l'angle que fait ladite branche 32 avec l'autre branche 38 du connecteur 30 varie de part et d'autre dudit épaulement 37.

A l'extrémité de la branche 32, l'angle qu'elle fait avec la branche 38 augmente de nouveau ; le connecteur 30 présente ainsi un moyen de déverrouillage 39 dirigé vers l'extérieur de l'extrémité recourbée du bras.

Lorsque l'on applique une force F sur ce moyen de déverrouillage 39, la branche 32 se rapproche de la branche 38 jusqu'à ce que le moyen d'accrochage 33 ou 34 mis en oeuvre sorte de la lumière 13.

De manière connue, le connecteur 30 comporte un moyen de réception de l'axe 22 constitué par un bossage 31 de sa face interne. Ce bossage 31 destiné à collaborer avec une portion dudit axe, présente sur sa face tournée vers le fond du U un profil complémentaire de celui-ci. Le connecteur 30 peut ainsi être clipsé sur l'axe 22.

De manière également connue, la surface externe du connecteur est bordée par deux flasques 40 qui lui sont perpendiculaires et assurent le guidage du bras lors de son montage ainsi que le maintien d'une bonne position relative.

Dans la zone courbée du connecteur 30, chacun des flasques 40 présente une échancrure 41 de façon à autoriser le déplacement relatif des branches 32 et 38 l'une par rapport à l'autre.

Afin de rattraper les tolérances de fabrication sur la largeur de l'ouverture 21 de l'étrier, les flasques 40 présentent sur leurs faces extérieures des bossages de faible épaisseur 42, 43, 44.

Dans l'exemple représenté, les bossages 42 sont globalement trapézoïdaux et situés vers l'extrémité de la branche 32 ; les bossages 43 sont rectangulaires et situés près de l'axe sur chacune des branches 32, 38 ; les bossages 44 sont allongés et situés dans l'arrondi du connecteur 30.

Bien entendu, la présente invention ne se limite pas aux formes de réalisation décrites et représentées, mais englobe toute variante d'exécution.

En particulier, le connecteur 30 peut présenter plus de deux ergots 33, 34, il suffit pour ce faire que la possibilité de débattement de la branche 32 soit assez grande.

**Revendications**

1. Connecteur pour solidariser un étrier (20) de balai d'essuie-glace et un bras (10) à extrémité recourbée (11) en U, ledit étrier comportant un axe transversal (22) tandis que ledit bras présente une lumière (13) sur une de ses branches (12) pour l'accrochage dudit connecteur, ledit connecteur (30) étant du genre comprenant une pièce à profil longitudinal sensiblement en forme de U à deux branches (32, 38) propre à se loger dans la concavité de l'extrémité recourbée (11) dudit bras, munie d'un moyen d'accrochage (33) propre à coopérer avec la lumière (13) dudit bras, caractérisé en ce que l'une des branches (32) dudit connecteur (30) comporte en plus dudit moyen d'accrochage (33), dit premier moyen d'accrochage, au moins un moyen d'accrochage (34) supplémentaire, dit second moyen d'accrochage, situé sur la même face (50) que celle où se trouve le premier moyen d'accrochage (33) et à une distance du fond du U différente de celle à laquelle se trouve ledit premier moyen d'accrochage (33).

2. Connecteur selon la revendication 1, caractérisé en ce que les moyens d'accrochage sont des ergots (33, 34) disposés sur la face externe (50) de la branche (32) du connecteur (30) destinée à coopérer avec la branche (12) du bras (10).

3. Connecteur selon la revendication 2, caractérisé en ce que la face (35, 36) des ergots (33, 34) opposée au fond du U est perpendiculaire à la branche (32).

4. Connecteur selon la revendication 3, caractérisé en ce que les faces (35,36) des ergots (33, 34) se raccordent à la partie courant de la branche (32) par une face oblique se rapprochant du fond du U.

5. Connecteur selon l'une des revendications précédentes, caractérisé en ce que, lorsque le moyen d'accrochage (33) utilisé est celui situé le plus près du fond du U, l'extrémité de la branche (12) du bras est positionnée près d'un épaulement (37) de la branche (32) du connecteur (30).

6. Connecteur selon la revendication 5, caractérisé en ce que l'angle que fait la branche (32) avec l'autre branche (38) du connecteur (30) varie de part et d'autre dudit épaulement (37).

7. Connecteur selon l'une des revendications précédentes, caractérisé en ce que, à l'extrémité de la branche (32) comportant les moyens d'accrochage (33, 34), l'angle que celle-ci fait avec la branche (38) augmente pour former un moyen de déverrouillage (39) dirigé vers l'extérieur.

8. Connecteur selon l'une des revendications précédentes, caractérisé en ce que le connecteur (30) présente un moyen de réception de l'axe (22) constitué par un bossage (31) de sa face interne.

9. Connecteur selon l'une des revendications précédentes, caractérisé en ce que la surface externe du connecteur (30) est bordée par deux flasques (40) qui lui sont perpendiculaires, chacun de ces flasques présente une échancrure (41) de façon à autoriser le déplacement relatif de la branche (32), comportant les moyens d'accrochage (33, 34) par rapport à l'autre branche (38) et des bossages (42, 43, 44) sur sa face externe de façon à rattraper les tolérances de fabrication de l'ouverture (21).

10. Connecteur selon l'une des revendications précédentes, caractérisé en ce qu'il est formé par une pièce moulée en matière plastique.


**Ansprüche**

1. Verbindungsstück, um einen Scheibenwischerblattbügel (20) und einen Arm (10) mit U-förmig gekrümmtem Ende (11) zu verbinden, wobei der genannte Bügel eine Querachse (22) besitzt, während der genannte Arm eine Öffnung (13) an einem seiner Schenkel (12) für das Eingreifen des genannten Verbindungsstücks aufweist, wobei das genannte Verbindungsstück (30) von der Art ist, die ein im wesentlichen U-förmiges Längsprofilstück mit zwei Schenkeln (32, 38) enthält, welches in die Aushöhlung des gekrümmten Endes (11) des genannten Arms eingesetzt werden kann, versehen mit einem Eingriffsmittel (33), das zum Zusammenwirken mit der Öffnung (13) des genannten Arms geeignet ist, **dadurch gekennzeichnet, daß** einer der Schenkel (32) des genannten Verbindungsstücks (30) zusätzlich zu dem genannten Eingriffsmittel (33), dem sogenannten ersten Eingriffsmittel, wenigstens ein weiteres Eingriffsmittel (34), das sogenannte zweite Eingriffsmittel, aufweist, welches auf der gleichen Fläche (50) liegt, an der sich auch das erste Eingriffsmittel (33) befindet, und einen anderen Abstand vom Boden des U-förmigen Elements aufweist als den Abstand, in dem sich das genannte erste Eingriffsmittel (33) befindet.

2. Verbindungsstück nach Anspruch 1, **dadurch gekennzeichnet, daß** die Eingriffsmittel Nocken (33, 34) sind, die an der Außenfläche (50) des Schenkels (32) des Verbindungsstücks (30) angeordnet sind, welche zum Zusammenwirken mit dem Schenkel (12) des Arms (10) bestimmt ist.

3. Verbindungsstück nach Anspruch 2, **dadurch gekennzeichnet, daß** die Fläche (35, 36) der Nocken (33, 34), die dem Boden des U-förmigen Elements gegenüberliegt, lotrecht zum Schenkel (32) verläuft.

4. Verbindungsstück nach Anspruch 3, **dadurch gekennzeichnet, daß** die Flächen (35, 36) der Nocken (33, 34) mit dem durchgehenden Teil des Schenkels (32) über eine sich dem Boden des U-förmigen Elements annähernde schräge Fläche verbunden sind.

5. Verbindungsstück nach einem der vorherigen Ansprüche, **dadurch gekennzeichnet, daß,** wenn es sich bei dem verwendeten Eingriffsmittel (33) um dasjenige handelt, welches dem Boden des U-förmigen Elements am nächsten gelegen ist, das Ende des Schenkels (12) des Arms sich in Nähe einer Schulter (37) des Schenkels (32) des Verbindungsstücks (30) befindet.

6. Verbindungsstück nach Anspruch 5, **dadurch gekennzeichnet, daß** der Winkel, den der Schenkel (32) mit dem anderen Schenkel (38) des Verbindungsstücks (30) bildet, beiderseits der genannten Schulter (37) unterschiedlich ist.

7. Verbindungsstück nach einem der vorherigen Ansprüche, **dadurch gekennzeichnet, daß** an dem Ende des Schenkels (32), welches die Eingriffsmittel (33, 34) aufweist, der Winkel, den dieser mit dem Schenkel (38) bildet, so zunimmt, daß ein nach außen gerichtetes Entriegelungsmittel (39) entsteht.

8. Verbindungsstück nach einem der vorherigen Ansprüche, **dadurch gekennzeichnet, daß** das Verbindungsstück (30) ein Mittel zur Aufnahme der Achse (22) besitzt, welches aus einem Vorsprung (31) der Innenfläche besteht.

9. Verbindungsstück nach einem der vorherigen Ansprüche, **dadurch gekennzeichnet, daß** die Außenfläche des Verbindungsstücks (30) von zwei Flanschen (40) eingefaßt ist, die lotrecht dazu verlaufen, wobei jeder dieser Flansche eine Aussparung (41) aufweist, so daß die relative Verschiebung des Schenkels (32) mit den Eingriffsmittel (33, 34) im Verhältnis zum anderen Schenkel (38) möglich wird, sowie Vorsprünge (42, 43, 44) auf der Außenseite, so daß die Fertigungstoleranzen der Öffnung (21) ausgeglichen werden.

10. Verbindungsstück nach einem der vorherigen Ansprüche, **dadurch gekennzeichnet, daß** dieses aus einem Kunststoff-Preßteil besteht.

## Claims

1. A connector for securing together a stirrup (20) of a windscreen wiper blade and an arm (10) having an end portion (11) bent in the form of a U, the said stirrup having a transverse axis element (22) while the said arm has an aperture (13) on one of its branches (12) for the attachment of the said connector, the said connector (30) being of the kind comprising a member having a longitudinal profile substantially in the form of a U, having two branches (32, 38) adapted to lie in the concavity of the bent-over end portion (11) of the said arm, being provided with an attachment means (33) for cooperation with the aperture (13) of the said arm, characterised in that one of the branches (32) of the said connector (30) further includes the said attachment means (33), referred to as the first attachment means, at least one supplementary attachment means (34), referred to as the second attachment means, situated on the same face (50) as that on which the first attachment means (33) is situated and at a distance from the base of the U which is different from that at which the said first attachment means (33) lies.

2. A connector according to Claim 1, characterised in that the attachment means are in the form of lugs (33, 34) disposed on the outer face (50) of the branch (32) of the connector (30) which is adapted to cooperate with the branch (12) of the arm (10).

3. A connector according to Claim 2, characterised in that the face (35, 36) of the lugs (33, 34) opposed to the base of the U is perpendicular to the branch (32).

4. A connector according to Claim 3, characterised in that the faces (35, 36) of the lugs (33, 34) are joined to the main portion of the branch (32) through an oblique face extending close to the base of the U.

5. A connector according to one of the preceding Claims, characterised in that, when the attachment means (33) that is employed is itself situated closer to the base of the U, the end portion of the branch (12) of the arm is positioned close to a shoulder (37) of the branch (32) of the connector (30).

6. A connector according to Claim 5, characterised in that the angle made by the branch (32) with the other branch (38) of the connector (30) varies on either side of the said shoulder (37).

7. A connector according to one of the preceding Claims, characterised in that, in the end portion of the branch (32) that includes the attachment means (33, 34), the angle made by that branch with the branch (38) is increased so as to constitute an unlocking means (39) which is directed outwardly.

8. A connector according to one of the preceding Claims, characterised in that the connector (30) has receiving means, for receiving the axis means (22) and comprising a raised portion (31) on its inner face.

9. A connector according to one of the preceding Claims, characterised in that the outer surface of the connector (30) is bordered by two flanges (40) which are perpendicular to it, with each of the said flanges having a slot (41) such as to permit relative displacement of the branch (32) that includes the attachment means (33, 34) with respect to the other branch (38), and bosses (42, 43, 44) on the outer face, whereby to absorb manufacturing tolerances in respect of the opening (21).

10. A connector according to one of the preceding Claims, characterised in that it is made by moulding in one piece in plastics material.

FIG 1

FIG 4

EP 0 329 515 B1

FIG 2

FIG 3